# EUROPÄISCHE PATENTSCHRIFT

(11) **EP 1 668 319 B1**
(45) Veröffentlichungstag und Bekanntmachung des Hinweises auf die Patenterteilung: **23.04.2008**
(21) Anmeldenummer: 04762541.3
(22) Anmeldetag: 28.07.2004
(51) Int. Cl.: G01D 11/24, G01S 7/481, G01S 17/08, G01C 15/00

(54) **ENTFERNUNGSMESSGERÄT**
DISTANCE MEASUREMENT DEVICE
APPAREIL TELEMETRIQUE

(30) Priorität: 25.09.2003 DE 10344586
(43) Veröffentlichungstag der Anmeldung: 14.06.2006
(73) Patentinhaber: ROBERT BOSCH GMBH, 70442 Stuttgart (DE)
(72) Erfinder: SCHULTE, Clemens, 70197 Stuttgart (DE)
(86) Internationale Anmeldenummer: PCT/DE2004/001696
(87) Internationale Veröffentlichungsnummer: WO 2005/038406

(56) Entgegenhaltungen:
- EP-A- 0 828 165
- WO-A-98/27439
- DE-A- 3 047 785
- DE-A- 10 142 166
- DE-A- 19 804 051
- DE-C- 10 149 144
- DE-U- 20 022 511
- NL-C- 1 003 305
- US-B1- 6 526 673

## Beschreibung

### Stand der Technik

Die Erfindung geht aus von einem Entfernungsmessgerät nach dem Oberbegriff des Anspruchs 1.

Aus der Offenlegungsschrift DE 101 42 166A1 ist ein Entfernungsmessgerät zur berührungslosen Entfernungsmessung bekannt, mit dem drei Messarten der Entfernungsmessung durchgeführt werden können. Durch Anlegen eines linienförmigen ersten Messanschlags an eine dem anzumessenden Objekt zugewandte Ecklinie und durch Anlegen eines flächigen zweiten Messanschlags an eine dem Objekt zugewandte Fläche können Entfernungen zwischen dem Objekt und der Ecklinie und der Fläche bestimmt werden. Durch einen dritten Messanschlag kann die Entfernung zwischen dem Objekt und einer objektabgewandten Fläche bestimmt werden. Zum Anlegen des dritten Messanschlags an die objektabgewandte Fläche wird an einem den zweiten Messanschlag bildenden Schwenkteil eine Schwenkklappe herausgeschwenkt, wobei in einer fixierten Schwenkstellung von Schwenkteil und Schwenkklappe der dritte Messanschlag in Messrichtung weist und in der Bezugsebene für die Abstandsmessung liegt, in der alle drei Messanschläge nach ihrer jeweiligen Aktivierung liegen. Jeder Messanschlag ist an einem anderen Messanschlagskörper angeordnet.

### Vorteile der Erfindung

Die Erfindung geht aus von einem Entfernungsmessgerät mit einer Messeinrichtung und zumindest einem Messanschlagskörper, der aus einem Gehäuse herausbewegbar ist und zumindest einen Messanschlag in einer Bezugsebene zur Messung einer Entfernung zwischen der Bezugsebene und einem anzumessenden Objekt aufweist.

Nach Anspruch 1 wird vorgeschlagen, dass eine erste Seite des Messanschlagskörpers einen ersten und einen zweiten Messanschlag bildet. Die erste Seite nimmt verschiedene Positionen bezüglich des Gehäuses ein. Durch Herausziehen des Messanschlagskörpers aus dem Gehäuse des Entfernungsmessgeräts, in eine Richtung parallel zu einer Messrichtung, kann eine Messreferenz auf die unterschiedlichen Messanschläge umgeschaltet werden. Dazu sind zweckmäßigerweise einerseits eine Recheneinheit und/oder Auswerteeinheit vorgesehen, die gegebenenfalls unter Berücksichtigung einer definierten Position des Messanschlagskörpers ein Signal der Messeinrichtung korrigieren und andererseits Detektionsmittel zum Erkennen einer definierten Position des Messanschlagskörpers. Es können Sensoren vorgesehen sein, die die Position und gegebenenfalls eine Schwenkwinkelstellung des Messanschlagskörpers gegenüber dem Gehäuse, insbesondere der Messrichtung, automatisch erkennen, oder es können solche Daten über eine dem Entfernungsmessgerät zugeordnete Eingabeeinheit, etwa eine Tastatur, manuell eingegeben werden. Es können Entfernungen von Ecken, Nuten, Kanten, beispielsweise bei Fenstern, und dem anzumessenden Objekt zugewandte und abgewandte Flächen mit einem einzigen Messanschlagskörper bestimmt werden. Zusätzliche Endstücke oder Adapter für unterschiedliche Messaufgaben können entfallen. Günstigerweise ist die Geräterückseite parallel zur Bezugsebene ausgerichtet. Als Messeinrichtung ist eine optische Messeinrichtung, insbesondere eine Laser-Messeinrichtung, bevorzugt, bei der ein Sendesignal zum anzumessenden Objekt gesendet und eine Laufzeitmessung mit Bezug auf die Entfernung zwischen Objekt und Bezugsebene vorgenommen wird. Alternativ ist auch eine Ultraschall- oder auch eine Hochfrequenz-Messeinrichtung einsetzbar.

Die erste Seite des Messanschlagskörpers bildet den ersten Messanschlag, wenn der Messanschlagskörper sich in einer eingefahrenen Position im Gehäuse befindet. Vorzugsweise ist die erste Seite eine Schmalseite des Messanschlagskörpers. Dieser befindet sich vollständig im Gehäuse, während die Schmalseite mit einer Geräterückseite des Gehäuses fluchtet. Die ganze Fläche der Geräterückseite kann als stabile Anlagefläche an eine dem Objekt zugewandte Seite angelegt werden. Die Bezugsebene, die üblicherweise senkrecht zur Messrichtung ausgerichtet ist, fällt mit der Fläche der Geräterückseite zusammen. Die erste Seite bildet in dieser Position den Messanschlag für eine dem anzumessenden Objekt zugewandte Fläche.

Bildet die erste Seite des Messanschlagskörpers den zweiten Messanschlag, wenn der Messanschlagskörper sich in einer aus dem Gehäuse ausgefahrenen Position befindet, kann durch einfaches Herausziehen des Messanschlagskörpers eine andere Messkonfiguration mit der gleichen Seite des Messanschlagskörpers dargestellt werden, die beispielsweise an dem anzumessenden Objekt zugewandten Ecken und Nuten angelegt werden kann. Zweckmäßigerweise können Rastmittel vorgesehen sein, damit ein Einrasten des Messanschlagskörpers in der ausgefahrenen Position an definierter Stelle erfolgen kann. Die Bezugsebene ist nunmehr entfernt von der Geräterückseite. Messsignale hinsichtlich der veränderten Bezugsebene können mit hoher Genauigkeit korrigiert werden. Bevorzugt erfolgt dies mittels einer entsprechenden Recheneinheit, die mit der Messeinrichtung zusammenwirkt. Dazu wird der Recheneinheit ein aktuelles Positionssignal des Messanschlagskörpers übermittelt.

Eine erste Flachseite des Messanschlagskörpers kann einen dritten Messanschlag bilden, wenn sich der Messanschlagskörper in einer gegenüber dem Gehäuse ausgeklappten Position befindet. Dazu kann der Messanschlagskörper in ausgefahrenem Zustand um eine Schwenkachse, insbesondere um einen konstanten Schwenkpunkt, geschwenkt und vor die Geräterückseite gelegt werden. Die erste Flachseite kann an eine dem anzumessenden Objekt abgewandte Fläche angelegt werden. Eine Korrektur bezüglich der Dicke des Messanschlagskörpers kann entsprechend durchgeführt werden, wenn die Bezugsebene sich an der gegenüberliegenden Flachseite befindet.

Bildet eine zweite Flachseite des Messanschlagskörpers einen vierten Messanschlag, wenn der Messanschlagskörper sich in einer gegenüber dem Gehäuse ausgeklappten Position befindet, kann in derselben Position des Messanschlagskörpers eine dem anzumessenden Objekt zugewandte Seite kontaktiert werden. Damit steht eine besonders große, stabile Auflagefläche zur Verfügung, deren Fläche größer ist als die der Geräterückseite.

Die zweite Flachseite bildet einen fünften Messanschlag, wenn sich der Messanschlagskörper in einer ausgeschwenkten Position befindet. Dann kann die Entfernung eines Punkts einer schrägen Fläche und dem anzumessenden Objekt zugewandten Fläche bestimmt werden. Eine Schwenkachse ist in einem mittleren Bereich des Messanschlagskörpers bezogen auf seine Längserstreckung in Messrichtung vorgesehen, die einen definierten Schwenkpunkt festlegt und auch ein Anlegen der gegenüberliegenden Flachseite an eine dem anzumessenden Objekt abgewandte schräge Fläche erlaubt. Eine Messung nach dem so genannten Pythagorasprinzip erlaubt zusätzlich eine indirekte Bestimmung einer Entfernung zwischen zwei Punkten, indem ausgehend von einem Messpunkt zu jedem der beiden Punkte eine Ersatzmessstrecke bestimmt wird und zumindest ein Winkel des durch die drei Entfernungen gebildeten Dreiecks bekannt ist. Steht eine Ersatzstrecke senkrecht auf der gesuchten Strecke, kann der Satz des Pythagoras zur Bestimmung der Entfernungen angewendet werden. Ist der Winkel zwischen den beiden Ersatzmessstrecken bekannt, kann dies mittels des bekannten Cosinus-Satzes erfolgen. Dies kann über eine Stativmessung erfolgen, bei dem das Entfernungsmessgerät auf ein Stativ um eine Stativachse schwenkbar aufgelegt wird, oder durch ein Schwenken des Messanschlagskörpers um einen definierten Schwenkwinkel. Vorteilhaft kann mit und ohne Stativ indirekt eine Entfernung bestimmt werden. Mit einem oder mehreren erfassten Schwenkwinkeln und Entfernungen können bedarfsgemäß verschiedene Rechenoperationen in einer zugeordneten Recheneinheit ausgeführt werden. Es können bestimmte Winkel und/oder Steigungen von Wänden, Böden, Decken etc., Strecken, Flächen und/oder verschiedene Volumina bestimmt werden, beispielsweise durch Multiplikation, Subtraktion, Integration, Anwendung des Cosinus-Satzes. Dazu kann der Messanschlagskörper um verschiedene Schwenkwinkel um die Schwenkachse geschwenkt werden.

Weist der Messanschlagskörper mindestens eine Schwenkachse senkrecht zu einer Auszugsrichtung des Messanschlagskörpers zum Schwenken und/oder Arretieren des Messanschlagskörpers auf, kann der Messanschlagskörper in definierten Schrägstellungen gehalten werden. Vorzugsweise sind Mittel zum Erfassen und/oder Eingeben des Schwenkwinkels vorgesehen. Eine hohe Messgenauigkeit wird ermöglicht. Sind zwei Schwenkachsen vorgesehen, kann der Messanschlagskörper in verschiedenen Längen ausgefahren und durch Arretiermittel, die mit den Schwenkachsen zusammenwirken, gesichert werden, womit auch schwierig zugängliche Flächen, z.B. tiefe Nuten, erreichbar sind.

Erstreckt sich der Messanschlagskörper in einer Abmessung von einer Seitenfläche des Gehäuses zur anderen Seitenfläche, ergibt sich eine maximale Auflagefläche auch bei kleinen Entfernungsmessgeräten. Dies erlaubt eine kompakte Bauweise von kleinen, handlichen Entfernungsmessgeräten.

Ist der Messanschlagskörper als ebene Platte ausgebildet, bietet sich eine besonders stabile Anlagefläche und kann in eingefahrener Position als Teil des Gehäuses fungieren. Bevorzugt ist die Platte aus Metall. Der Fachmann wird jedoch auch ein anderes Material auswählen, wenn dies sinnvoll erscheint.

Ist der Messanschlagskörper als Bügel ausgebildet, kann Gewicht eingespart werden und gleichzeitig eine günstige und besonders Platz sparende Anordnung des Bügels um die im Innern des Entfernungsmessgeräts vorhandene Messeinrichtung, die auch eine Recheneinheit und/oder Auswerteeinheit umfassen kann, erreicht werden.

Bevorzugt ist im Entfernungsmessgerät in der ersten Geräteflachseite eine randseitige Aussparung vorgesehen, durch die Schenkel des Messanschlagskörpers zum Schwenken freigebbar sind. Der Bügel kann günstig etwa um eine mittige Schwenkachse geschwenkt werden. Das Entfernungsmessgerät kann in der Baulänge kürzer ausfallen.

Sind Mittel zur Erfassung einer Position und/oder eines Schwenkwinkels des Messanschlagskörpers vorgesehen, wird die Bedienung des Entfernungsmessgeräts erleichtert. Alternativ können Position und/oder Schwenkwinkel auch manuell in das Entfernungsmessgerät eingegeben werden.

Zweckmäßigerweise können auch mehrere Achsen zum Schwenken und Führungen zum Führen des Messanschlagskörpers vorgesehen sein, um die Bewegungsmöglichkeiten und Einrastungen des Messanschlagskörpers zu beeinflussen. Einrastvorrichtungen und/oder Führungen erlauben das Feststellen des Messanschlagskörpers in definierter Position. Optional kann eine Federvorspannung für ein komfortables Einschnappen des Messanschlagskörpers in die Positionen sorgen. Das erfindungsgemäße Entfernungsmessgerät ist besonders günstig als Handgerät einsetzbar.

### Zeichnung

Weitere Vorteile ergeben sich aus der folgenden Zeichnungsbeschreibung. In der Zeichnung sind drei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: schematisch eine seitliche Ansicht eines bevorzugten Entfernungsmessgeräts mit einem ersten bevorzugten Messanschlagskörper, (a) in eingefahrener Position, (b) in ausgefahrener Position, (c) in ausgeschwenkter Position, (d) in ausgeklappter Position,
- Fig. 2: eine schräge Draufsicht auf ein bevorzugtes Entfernungsmessgerät mit einem zweiten bevorzugten Messanschlagskörper in Bügelform, (a) in eingefahrener Position und ausgefahrener Position (gestrichelt), (b) den bügelförmigen Messanschlagskörper im Detail, (c) den Messanschlagskörper in ausgeklappter Position und
- Fig. 3: schematisch eine seitliche Ansicht eines bevorzugten Entfernungsmessgeräts mit einem Messanschlagskörper mit zwei Schwenkachsen.

### Beschreibung der Ausführungsbeispiele

Wo immer möglich, werden in den Figuren gleiche oder sich entsprechende Teile mit gleichen Bezugszeichen verwendet.

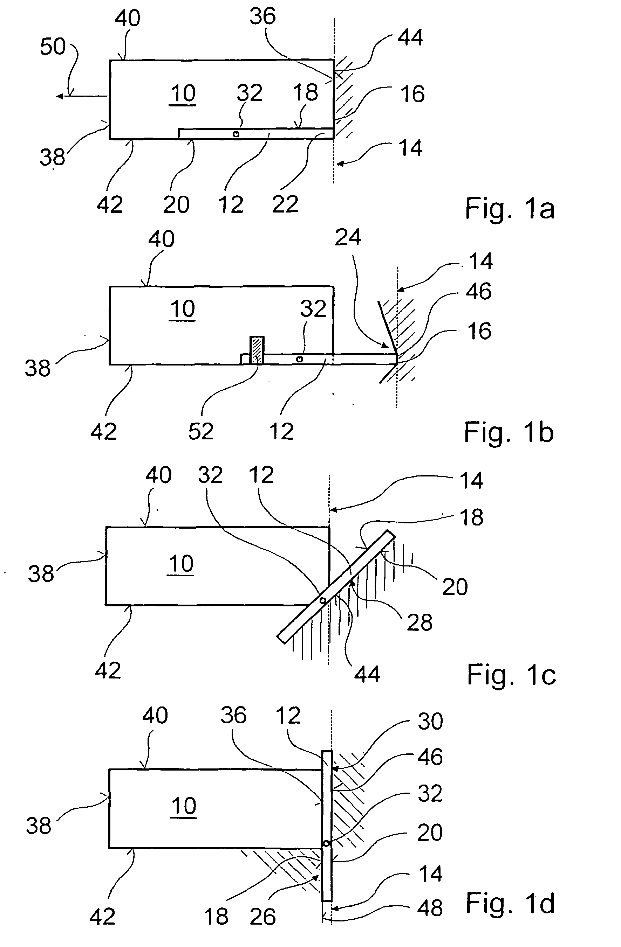

Ein bevorzugtes Entfernungsmessgerät in Fig. 1 a-d zeigt einen mit einem Gehäuse 10 verbundenen Messanschlagskörper 12 in unterschiedlichen, definierten Positionen. Details des Entfernungsmessgeräts, wie eine Messeinrichtung mit etwaigen Rechen- und/oder Auswerteeinheiten zur Auswertung und gegebenenfalls Ausgabe eines Messsignals, sind nicht dargestellt. Das Gehäuse 10 weist eine Vorderseite 38 auf, die dem nicht dargestellten anzumessenden Objekt zugewandt ist und aus der ein Sendesignal in einer Messrichtung 50 ausgesendet wird, sowie eine Geräterückseite 36, die einer Bezugsebene 14 zugewandt ist, mit der der Messanschlagskörper 12 in Anschlag gebracht wird. Zweckmäßigerweise ist die Geräterückseite 36 parallel zur Bezugsebene 14 ausgerichtet. Weiterhin sind eine obere Flachseite 40 und eine untere Flachseite 42 vorgesehen. Mit einer ersten Flachseite 18 ist der Messanschlagskörper 12 dem Gehäuse 10 großflächig zugewandt. In der unteren Flachseite 42 des Gehäuses 10 bildet eine zweite Flachseite 20 des Messanschlagskörpers 12 einen Bestandteil derselben und fluchtet mit dieser. Die zweite Flachseite 20 könnte jedoch auch mit einem Abstand zur Flachseite 42 angeordnet sein. Der Messanschlagskörper 12 bildet in einer im Gehäuse 10 eingefahrenen Position bevorzugt einen Teil des Gehäuses 10. Eine zu den Flachseiten 18, 20 senkrechte erste Seite 16, eine Schmalseite des Messanschlagskörpers 12, fluchtet mit der Geräterückseite 36 des Gehäuses 10 (Fig. 1a) und liegt als erster Messanschlag 22 zusammen mit der Geräterückseite 36 großflächig an einer dem anzumessenden Objekt zugewandten Fläche 44 an, die mit einer Bezugsebene 14 zusammenfällt.

Der Messanschlagskörper 12 ist aus dem Gehäuse 10 herausbewegbar (Fig. 1b) und weist einen zweiten Messanschlag 24 in der Bezugsebene 14 zur Entfernungsmessung auf. Vorzugsweise ist der Messanschlagskörper 12 parallel zu der Messrichtung 50 aus der Geräterückseite 36 herausziehbar. Die erste Seite 16 liegt in einer dem Objekt zugewandten Ecke 46 an. In der gezeigten ausgefahrenen Position sind Rastmittel 52 vorgesehen, um den Messanschlagskörper 12 definiert in der Position einzurasten. Die Bezugsebene 14 ist entfernt von der Geräterückseite 36, bevorzugt parallel zur Geräterückseite 36.

Der Messanschlagskörper 12 weist einen dritten Messanschlag 26 für eine dem Objekt abgewandte Fläche 48 auf, wenn der Messanschlagskörper 12 aus dem Gehäuse 10 so weit ausgefahren ist, dass er um eine Schwenkachse 32 um 90° geschwenkt und vor die Geräterückseite 36 gelegt werden kann (Fig. 1d). Der Messanschlagskörper 12 ist länger als das Gehäuse 10 hoch ist, so dass beidseits ein Teil des Messanschlagskörpers 12 übersteht. Die erste Flachseite 18 des Messanschlagskörpers 12 kann daher an eine dem anzumessenden Objekt abgewandte Fläche 48 angelegt werden. Die Bezugsebene 14 fällt mit der zweiten Flachseite 20 zusammen, und ein Messsignal kann um eine Dicke des Messanschlagskörpers 12 korrigiert werden. Neben einer softwaremäßigen Korrektur wäre auch eine mechanische Korrektur denkbar. Ebenso kann die zweite Flachseite 20 ganzflächig zur Anlage an einer dem Objekt zugewandten Fläche 44 gebracht werden.

In Fig. 1c bildet die zweite Flachseite 20 einen fünften Messanschlag 30, wobei der Messanschlagskörper 12 in einer ausgeschwenkten Position mit einem Schwenkwinkel zwischen 0° und 90° von der Geräterückseite 36 absteht, wobei der Messanschlagskörper 12 um die Schwenkachse 32 geschwenkt ist und an einer schrägen Fläche 44 anliegt. Die Bezugsebene 14 fällt mit der Geräterückseite 36 zusammen. Der Messanschlagskörper 12 ist günstigerweise als ebene Platte ausgebildet, die bevorzugt so breit ist wie die untere Flachseite 42. Die Platte kann durch nicht dargestellte Führungsnuten im Entfernungsmessgerät geführt werden, bevorzugt solche, in denen die mit der ersten Flachseite 18 befestigte Schwenkachse 32 geführt ist. Vorzugsweise sind nicht dargestellte Sensoren vorgesehen, die den eingestellten Schwenkwinkel erkennen und an eine nicht dargestellte Recheneinheit weitergeben. Alternativ kann bei bekanntem Schwenkwinkel der entsprechende Wert über eine Tastatur eingegeben werden.

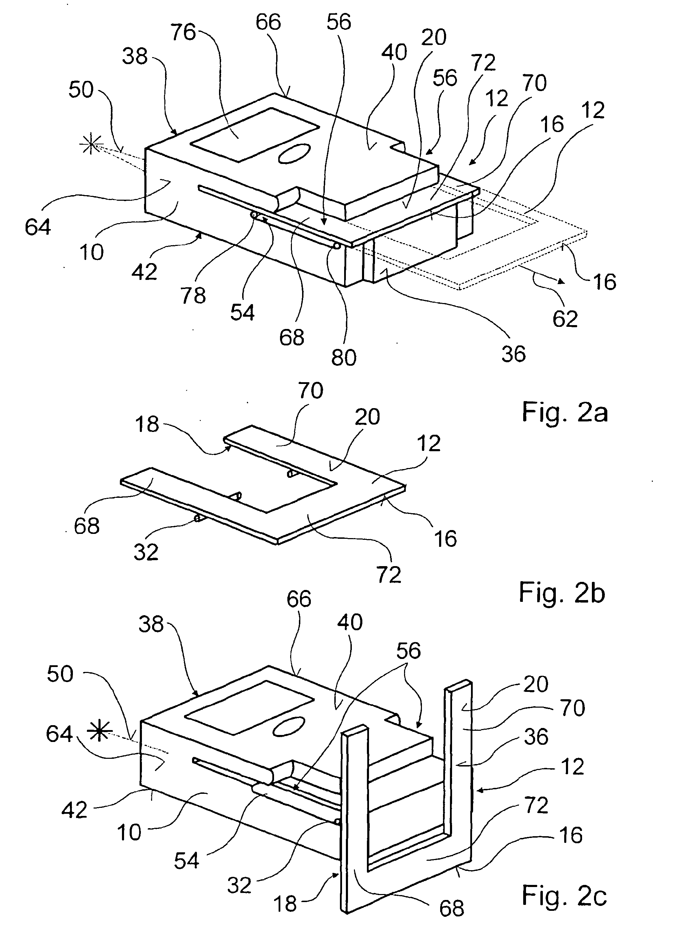

Fig. 2 a-c zeigt eine bevorzugte Ausgestaltung des Messanschlagskörpers 12, der als flacher Bügel mit zwei Schenkeln 68, 70 und einer diese verbindenden Querstrebe 72 ausgebildet ist, wobei die Querstrebe 72 an der Geräterückseite 36 angeordnet ist und die Schenkel 68, 70 in der eingefahrenen Position zum anzumessenden Objekt hinweisen. Der Bügel ist in einer Auszugsrichtung 62 aus der Geräterückseite 36 herausziehbar. Der Messanschlagskörper 12 ist in etwa mittig zwischen den Geräteflachseiten 40, 42 angeordnet. Als Führung ist eine Führungsnut 54 vorgesehen. Die Führungsnut 54 weist einen hinteren Anschlag 78 und vorderen Anschlag 80 für die, vorzugsweise angeschweißte Schwenkachse 32 auf, an denen der Messanschlagskörper 12 in der eingefahrenen bzw. ausgefahrenen Position mit der Schwenkachse 32 anschlägt. Auf der ersten Geräteflachseite 40 können nicht näher dargestellte Anzeige- und Eingabeeinheiten 76 vorgesehen sein. Im Gehäuse 10 ist in der oberen Geräteflachseite 40 eine tiefe randseitige Aussparung 56 vorgesehen, durch die Schenkel 68, 70 des Messanschlagskörpers 12 zum Schwenken um die Schwenkachse 32 freigebbar sind, wenn dieser sich in der ausgefahrenen Position befindet. Die Querstrebe 72 nimmt die gesamte Breite des Gehäuses 10 ein, indem der Messanschlagskörper 12 sich in einer Abmessung von einer Seitenfläche 64 des Entfernungsmessgeräts 12 zur anderen Seitenfläche 66 erstreckt. Vorzugsweise weist die Geräterückseite 36 an den Schmalseiten seitliche Aussparungen auf, so dass der Messanschlagskörper 12 mit den Schenkeln 68, 70 und der Querstrebe 72 um die Geräterückseite 36 herum anliegt. Zusammen mit dem Bügel kann die Geräterückseite 36 die Auflagefläche bilden.

Die Flachseiten 18, 20 und die erste Seite 16 sind mit entsprechenden Flächen und Strukturen, wie in Fig. 1 beschrieben, in Kontakt bringbar. Eine Pythagorasmessung kann in einer ausgefahrenen Position des Messanschlagskörpers 12 durchgeführt werden. Alternativ kann der Messanschlagskörper 12 ähnlich wie in Fig. 1 in eine Geräteflachseite 40, 42 eingelassen sein.

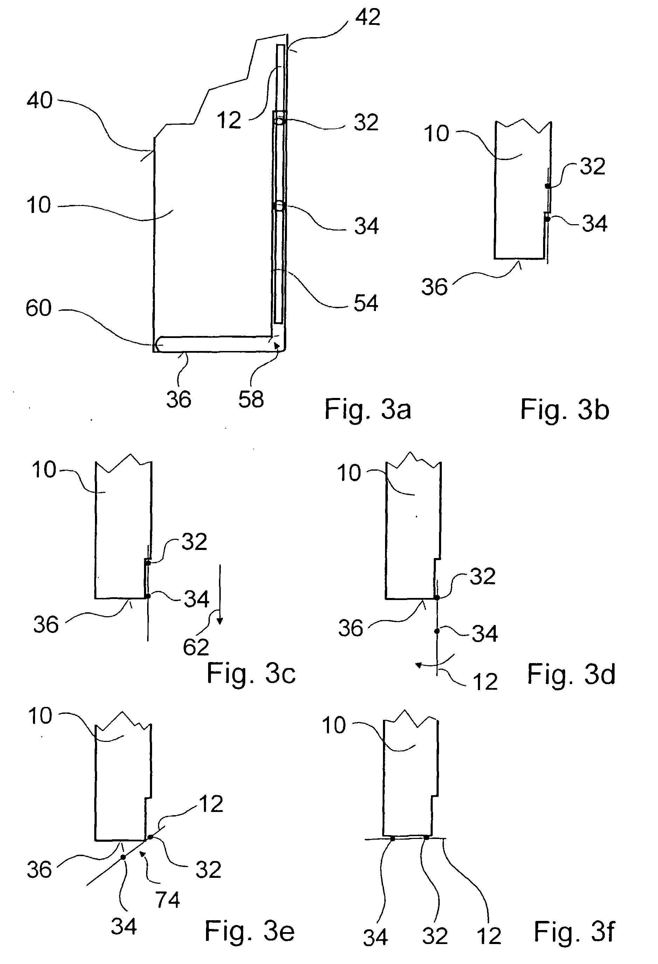

Fig. 3 a-f zeigt eine Variante, bei der der Messanschlagskörper 12 zwei zueinander parallele, voneinander beabstandete Schwenkachsen 32, 34 senkrecht zu der Auszugsrichtung 62 des Messanschlagskörpers 12 zum Schwenken und/oder Arretieren des Messanschlagskörpers 12 aufweist. Es können geräteseitig an der Geräterückseite 36 Rastmittel 58, 60 vorgesehen sein, die mit den Schwenkachsen 32, 34 des Messanschlagskörpers 12 so zusammenwirken, dass sie im ausgeklappten Zustand (Fig. 3f) mit diesen einrasten und an der Geräterückseite 36 festgelegt sind. Fig. 3 a, b zeigt den Messanschlagskörper 12 in eingefahrener Position, in Fig. 3c ist der Messanschlagskörper 12 bis zu der vorderen Schwenkachse 34 in Auszugsrichtung 62 ausgefahren und in Fig. 3d bis zur hinteren Schwenkachse 32 ausgefahren. In dieser Position wird der Messanschlagskörper 12 noch am Schwenken gehindert, und zwar indem dieser noch teilweise ins Gehäuse 10 ragt und von diesem am Schwenken gehindert wird. In dieser Position ist der Messanschlagskörper 12 vor die Geräterückseite 36 des Gehäuses 10 so schwenkbar, dass beide Schwenkachsen 32, 34 mit beiden Rastmitteln 58, 60 gehalten werden können (Fig. 3 f). Der Messanschlagskörper 12 ist in beiden Positionen um die jeweilige Schwenkachse 32, 34 schwenkbar, etwa zur Pythagorasmessung oder zur Erfassung von Winkeln. Fig. 3e zeigt eine Position des Messanschlagskörpers 12, bei der dieser um die vordere Schwenkachse 34 um einen Winkel geschwenkt ist, um eine schräge Fläche 74 zu kontaktieren. Auch hier können automatische oder manuelle Mittel zum Erfassen der Position und/oder des Schwenkwinkels des Messanschlagskörpers 12 vorgesehen sein.

### Bezugszeichen

- 10: Gehäuse
- 12: Messanschlagskörper
- 14: Bezugsebene
- 16: Schmalseite
- 18: erste Flachseite
- 20: zweite Flachseite
- 22: erster Messanschlag
- 24: zweiter Messanschlag
- 26: dritter Messanschlag
- 28: vierter Messanschlag
- 30: fünfter Messanschlag
- 32: erste Schwenkachse
- 34: zweite Schwenkachse
- 36: Geräterückseite
- 38: Gerätevorderseite
- 40: erste Geräteflachseite
- 42: zweite Geräteflachseite
- 44: zugewandte Fläche
- 46: zugewandte Ecke
- 48: abgewandte Fläche
- 50: Messrichtung
- 52: Rastmittel
- 54: Führungsnut
- 56: Aussparung
- 58: Rastmittel
- 60: Rastmittel
- 62: Auszugsrichtung
- 64: Seitenfläche
- 66: Seitenfläche
- 68: Schenkel
- 70: Schenkel
- 72: Querstrebe
- 74: schräge Fläche
- 76: Anzeige- und Eingabeeinheit
- 78: Anschlag
- 80: Anschlag

## Patentansprüche

1. Entfernungsmessgerät mit einer Messeinrichtung, bei der ein Sendesignal zu einem anzumessenden Objekt gesendet und eine Laufzeitmessung mit Bezug auf die Entfernung zwischen Objekt und einer Bezugsebene (14) vorgenommen wird, sowie mit zumindest einem Messanschlagskörper (12), der aus einem Gehäuse (10) heraus bewegbar ist und zumindest einen Messanschlag (22, 24, 26, 28, 30) in einer Bezugsebene (14) zur Entfernungsmessung zwischen der Bezugsebene (14) und einem anzumessenden Objekt aufweist, **dadurch gekennzeichnet, dass** der Messanschlagskörper (12) parallel zu einer Messrichtung (50) aus einer Gehäuserückseite (36) des Gehäuse (10) heraus bewegbar ist, wobei eine erste Seite (16) des Messanschlagskörpers (12) in einer ersten, im Gehäuse eingefahrenen Position einen ersten Messanschlag (22) bildet und in einer zweiten, aus dem Gehäuse heraus gefahrenen Position einen zweiten Messanschlag (24) bildet.

2. Entfernungsmessgerät nach einem der vorangegangenen Ansprüche, **dadurch gekennzeichnet, dass** eine erste Flachseite (18) des Messanschlagskörpers (12) einen dritten Messanschlag (26) bildet, wenn der Messanschlagskörper (12) sich in einer gegenüber dem Gehäuse (10) ausgeklappten Position befindet.

3. Entfernungsmessgerät nach einem der vorangegangenen Ansprüche, **dadurch gekennzeichnet, dass** eine zweite Flachseite (20) des Messanschlagskörpers (12) einen vierten Messanschlag (28) bildet, wenn der Messanschlagskörper (12) sich in einer gegenüber dem Gehäuse (10) ausgeklappten Position befindet.

4. Entfernungsmessgerät nach Anspruch 5, **dadurch gekennzeichnet, dass** die zweite Flachseite (20) einen fünften Messanschlag (30) bildet, wenn sich der Messanschlagskörper (12) in einer ausgeschwenkten Position befindet.

5. Entfernungsmessgerät nach einem der vorangegangenen Ansprüche, **dadurch gekennzeichnet, dass** der Messanschlagskörper (12) mindestens eine Schwenkachse (32, 34) senkrecht zu einer Auszugsrichtung (62) des Messanschlagskörpers (12) zum Schwenken und/oder Arretieren des Messanschlagskörpers (12) aufweist.

6. Entfernungsmessgerät nach einem der vorhergehenden Ansprüche, **dadurch gekennzeichnet dass** der Messanschlagskörper (12) sich in einer Abmessung von einer Seitenfläche (64) des Gehäuses (10) zur anderen Seitenfläche (66) erstreckt.

7. Entfernungsmessgerät nach einem der vorhergehenden Ansprüche, **dadurch gekennzeichnet, dass** der Messanschlagskörper (12) als ebene Platte ausgebildet ist.

8. Entfernungsmessgerät nach einem der vorhergehenden Ansprüche, **dadurch gekennzeichnet, dass** der Messanschlagskörper (12) als Bügel ausgebildet ist.

9. Entfernungsmessgerät nach Anspruch 10, **dadurch gekennzeichnet, dass** in der ersten Geräteflachseite (40) des Gehäuses (10) eine randseitige Aussparung (56) vorgesehen ist, durch die Schenkel (68, 70) des Messanschlagskörpers (12) zum Schwenken freigebbar sind.

10. Entfernungsmessgerät nach einem der vorhergehenden Ansprüche, **dadurch gekennzeichnet, dass** Mittel zur Erfassung einer Position und/oder eines Schwenkwinkels des Messanschlagskörpers (12) vorgesehen sind.

## Claims

1. Distance measurement unit having a measuring device in which a transmit signal is transmitted to an object to be measured, and a travel time measurement is undertaken with reference to the distance between object and a reference plane (14), and having at least one measurement stop body (12) which can be moved out of a housing (10) and has at least one measurement stop (22, 24, 26, 28, 30) in a reference plane (14) for the purpose of distance measurement between the reference plane (14) and an object to be measured, **characterized in that** the measurement stop body (12) can be moved out of a housing rear side (36) of the housing (10) in a fashion parallel to a measurement direction (50), a first side (16) of the measurement stop body (12) forming a first measurement stop (22) in a first position into which it has been moved in the housing, and forming a second measurement stop (24) in a second position out of which it has been moved in the housing.

2. Distance measurement unit according to one of the preceding claims, **characterized in that** a first flat side (18) of the measurement stop body (12) forms a third measurement stop (26) when the measurement stop body (12) is located in a position moulded out from the housing (10).

3. Distance measurement unit according to one of the preceding claims, **characterized in that** a second flat side (20) of the measurement stop body (12) forms a fourth measurement stop (28) when the measurement stop body (12) is located in a position moulded out from the housing (10).

4. Distance measurement unit according to Claim 5, **characterized in that** the second flat side (20) forms a fifth measurement stop (30) when the measurement stop body (12) is located in a swung out position.

5. Distance measurement unit according to one of the preceding claims, **characterized in that** the measurement stop body (12) has at least one swinging axis (32, 34) perpendicular to a withdrawal direction (62) of the measurement stop body (12), for the purpose of swinging and/or locking the measurement stop body (12).

6. Distance measurement unit according to one of the preceding claims, **characterized in that** the measurement stop body (12) extends in one dimension from one side face (64) of the housing (10) to the other side face (66).

7. Distance measurement unit according to one of the preceding claims, **characterized in that** the measurement stop body (12) is designed as a flat plate.

8. Distance measurement unit according to one of the preceding claims, **characterized in that** the measurement stop body (12) is designed as a yoke.

9. Distance measurement unit according to Claim 10, **characterized in that** provided in a first unit flat side (40) of the housing (10) is a lateral cutout (56) through which limbs (68, 70) of the measurement stop body (12) can be released to swing.

10. Distance measurement unit according to one of the preceding claims, **characterized in that** means are provided for detecting a position and/or a swing angle of the measurement stop body (12).

## Revendications

1. Appareil de télémétrie comportant une installation de mesure, selon lequel un signal de mesure est envoyé vers un objet à mesurer et qui mesure le temps de parcours pour l'éloignement entre l'objet et un plan de référence (14), ainsi qu'au moins un organe formant butée de mesure (12) qui peut être sorti du boîtier (10) et comporte au moins une butée de mesure (22, 24, 26, 28, 30) dans un plan de référence (14) pour mesurer la distance entre le plan de référence (14) et un objet à mesurer,
**caractérisé en ce que**
l'organe de butée de mesure (12) peut être dégagé parallèlement à une direction de mesure (50) hors du dos (36) du boîtier (10),
un premier côté (16) de l'organe de butée de mesure (12) formant dans une première position rentrée, une première butée de mesure (22) et dans une seconde position sortie du boîtier, une seconde butée de mesure (24).

2. Appareil de télémétrie selon la revendication 1,
**caractérisé en ce que**
le premier côté plat (18) de l'organe de butée de mesure (12) forme une troisième butée de mesure (26) lorsque l'organe de butée de mesure (12) se trouve dans une position déployée par rapport au boîtier (10).

3. Appareil de télémétrie selon l'une des revendications précédentes,
**caractérisé en ce qu'**
un second côté plat (20) de l'organe de butée de mesure (12) forme une quatrième butée de mesure (28) si l'organe de butée de mesure (12) se trouve dans une position déployée par rapport au boîtier (10).

4. Appareil de télémétrie selon la revendication 5,
**caractérisé en ce que**
le second côté plat (20) forme une cinquième butée de mesure (30) si l'organe de butée de mesure (12) se trouve dans une position déployée.

5. Appareil de télémétrie selon l'une des revendications précédentes,
**caractérisé en ce que**
l'organe de butée de mesure (12) comporte au moins un axe de pivotement (32, 34) perpendiculaire à une direction d'alignement (62) de l'organe de butée de mesure (12) pour pivoter et/ou bloquer l'organe de butée de mesure (12).

6. Appareil de télémétrie selon l'une des revendications précédentes,
**caractérisé en ce que**
l'organe de butée de mesure (12) s'étend d'une surface latérale (64) du boîtier (10) à l'autre surface latérale (66) pour effectuer une mesure.

7. Appareil de télémétrie selon l'une des revendications précédentes,
**caractérisé en ce que**
l'organe de butée de mesure (12) est en forme de plaque plane.

8. Appareil de télémétrie selon l'une des revendications précédentes,
**caractérisé en ce que**
l'organe de butée de mesure (12) est en forme d'arceau.

9. Appareil de télémétrie selon la revendication 8,
**caractérisé en ce que**
le premier côté plat (40) de l'appareil du boîtier (10) comporte un dégagement (56) du côté du bord permettant de pivoter pour dégager librement les branches (68, 70) de l'organe de butée de mesure (12).

10. Appareil de télémétrie selon l'une des revendications précédentes,
**caractérisé par**
des moyens pour saisir une position et/ou un angle de pivotement de l'organe de butée de mesure (12).
